# EUROPÄISCHE PATENTSCHRIFT

(11) **EP 1 159 675 B1**
(45) Veröffentlichungstag und Bekanntmachung des Hinweises auf die Patenterteilung: **30.10.2002**
(21) Anmeldenummer: 00908974.9
(22) Anmeldetag: 01.02.2000
(51) Int. Cl.: G06F 9/32, G06F 9/318

(54) **MIKROPROZESSOR UND VERFAHREN ZUR ADRESSIERUNG IN EINEM MIKROPROZESSOR**
MICROPROCESSOR AND METHOD FOR ADDRESSING IN A MICROPROCESSOR
MICROPROCESSEUR ET PROCEDE POUR L'ADRESSAGE DANS UN MICROPROCESSEUR

(30) Priorität: 10.02.1999 DE 19905510
(43) Veröffentlichungstag der Anmeldung: 05.12.2001
(73) Patentinhaber: Infineon Technologies AG, 81669 München (DE)
(72) Erfinder: SEDLAK, Holger, D-85658 Egmating (DE); KNIFFLER, Oliver, D-81737 München (DE)
(74) Vertreter: Epping Hermann & Fischer
(86) Internationale Anmeldenummer: DE0000291
(87) Internationale Veröffentlichungsnummer: WO00048071

(56) Entgegenhaltungen:
- EP-A- 0 286 260
- EP-A- 0 709 767
- EP-A- 0 747 808
- "METHOD FOR CALCULATING A JUMP ADDRESS IN A MICROPROCESSOR" IBM TECHNICAL DISCLOSURE BULLETIN,US,IBM CORP. NEW YORK, Bd. 31, Nr. 8, 1. Januar 1989 (1989-01-01), Seiten 371-372, XP000050933 ISSN: 0018-8689

## Beschreibung

Die vorliegende Erfindung betrifft einen Mikroprozessor zur Verarbeitung verschiedener Assembler und ein Verfahren zur relativen Adressierung in einem Mikroprozessor.

Computerprogramme müssen, damit sie von einem Mikroprozessor abgearbeitet werden können, in einen sogenannten Assemblercode, d.h. in eine für den Mikroprozessor direkt ausführbare Programmiersprache übersetzt werden. Derzeit sind nun am Markt verschiedene Assemblercodes üblich, beispielsweise JAVA-Byte-Code oder ECO 2000 Assembler.

Mikroprozessoren gemäß dem Stand der Technik wurden bisher immer so gebaut, daß sie nur einen einzigen Assemblercode verarbeiten konnten. Dies ist natürlich nachteilig, da die Computerprogramme dann für jeden Prozessor in den jeweils anzuwendenden Assemblercode übersetzt werden müssen.

Aus der EP-A-0747808 ist ein Prozessor bekannt, bei dem unterschiedliche Befehlssätze verwendbar sind. Mit Hilfe eines Steuerbits wird auf unterschiedliche Adreßerzeugungsmechanismen umgeschaltet.

Aus der EP-A-0709767 ist eine CPU bekannt, die Befehlssätze verschiedener Architekturen ausführen kann. Dabei bezeichnen die ersten drei Bits eines Befehls den jeweiligen Befehlssatz. Bei relativer Adressierung und Verarbeitung von 32-Bit-Befehlen wird der Adreßraum für 64-Bit-Befeble kaschiert, so daß keine Probleme auftauchen.

Die vorliegende Erfindung dient zur Entwicklung eines Mikroprozessors, der unterschiedliche Assemblercodes abarbeiten kann. Eine große Schwierigkeit dabei liegt darin, daß sich die Berechnung relativer Adressen bei unterschiedlichen Assemblercodes auf unterschiedliche Programmzählerdefinitionen bezieht. Beispielsweise bezieht sich die relative Adressierung bei JAVA-Byte-Code immer auf den aktuellen Assemblerbefehl, bei ECO 2000 Assembler immer auf den Befehlszählerstand, der auf den nächsten auszuführenden Assemblerbefehl zeigt.

Es ist daher Aufgabe der vorliegenden Erfindung, einen Mikroprozessor und ein Verfahren zur relativen Adressierung in einem Mikroprozessor zu schaffen, bei dem in Abhängigkeit von dem jeweiligen Assemblercode immer eine richtige relative Adressberechnung zu dem richtigen relativen Sprungziel oder den richtigen relativen Daten erfolgt.

Erfindungsgemäß wird diese Aufgabe durch einen Mikroprozessor zur Verarbeitung verschiedener Assembler gelöst, indem ein Parameter vorgesehen ist, der den jeweiligen Assemblercode bezeichnet, und abhängig von diesem Parameter eine unterschiedliche relative Adressierung erfolgt.

Erfindungsgemäß ist es dabei beispielsweise möglich, mehrere Programmzähler vorzusehen, und abhängig von dem Parameter jeweils einen dieser Programmzähler für die Berechnung der relativen Adressen zu aktivieren.

Dabei ist es erfindungsgemäß besonders bevorzugt, daß die Programmzähler mit einem Multiplexer verbunden sind, der von dem Parameter gesteuert wird, und der Ausgang des Multiplexers mit der Berechnungseinheit für die relativen Adressen verbunden ist. Auf diese Weise kann die Auswahl des richtigen Programmzählers sehr leicht erfolgen.

Weiter kann die richtige relative Adressierung erfindungsgemäß dadurch sichergestellt werden, daß zwischen dem Programmzähler und der Berechnungeinheit für die relativen Adressen ein Addierwerk angeordnet ist, dessen einer Eingang mit dem Programmzähler und dessen anderer Eingang über einen Multiplexer, der von dem Parameter gesteuert wird, mit einem Speicher für die Befehlslänge oder mit dem Wert 0 verbunden wird, und dessen Ausgang mit der Berechnungseinheit verbunden ist.

Ebenso kann erfindungsgemäß eine richtige relative Adressierung erreicht werden, indem zwischen dem Programmzähler und der Berechnungseinheit für die relativen Adressen ein Subtrahierwerk angeordnet ist, dessen einer Eingang mit dem Programmzähler und dessen anderer Eingang über einen Multiplexer, der von dem Parameter gesteuert wird, mit einem Speicher für die Befehlslänge oder mit dem Wert 0 verbunden wird, und dessen Ausgang mit der Berechnungseinheit verbunden ist.

Zur Lösung der erfindungsgemäßen Aufgabe lehrt die vorliegende Erfindung weiter ein Verfahren zur relativen Adressierung in einem Mikroprozessor, wobei abhängig von einem Betriebszustand oder Parameter für den jeweiligen Assemblercode relative Adressen unterschiedlich ermittelt werden.

Dazu ist es erfindungsgemäß bevorzugt, für die verschiedenen Betriebszustände oder Assemblercodes mehrere Programmzähler vorzusehen, die abhängig vom Betriebszustand oder Assemblercode ausgewählt werden.

Ebenso ist es erfindungsgemäß vorzugsweise möglich, abhängig von den verschiedenen Betriebszuständen oder Assemblercodes, zu dem Programmzählerstand für die relative Adressberechnung die Befehlslänge hinzuzuzählen oder abzuziehen, oder den Programmzählerstand unverändert zu belassen.

Ebenso ist es erfindungsgemäß möglich, abhängig von den verschiedenen Betriebszuständen oder Assemblercodes zu dem Offsetwert, der üblicherweise zur Berechnung relativer Adressen herangezogen wird, eine Befehlslänge hinzuzuzählen, oder abzuziehen, oder den Offsetwert jeweils unverändert zu belassen.

Verschiedene Ausführungsbeispiele der vorliegenden Erfindung werden nun anhand der beigefügten Zeichnungen näher erläutert. Es zeigt:
**Fig. 1** eine erfindungsgemäße Schaltung, bei der eine Auswahl zwischen verschiedenen Befehlszählern erfolgt;
**Fig. 2** eine erfindungsgemäße Schaltung, bei der abhängig von dem jeweiligen Assemblercode eine Befehlslänge zu dem Befehlszählerstand hinzugezählt wird, oder nicht; und
**Fig. 3** eine Schaltung zur Berechnung des Befehlszählerstandes zur relativen Adressierung, bei der die Befehlslänge von dem Befehlszählerstand abgezogen wird oder nicht.

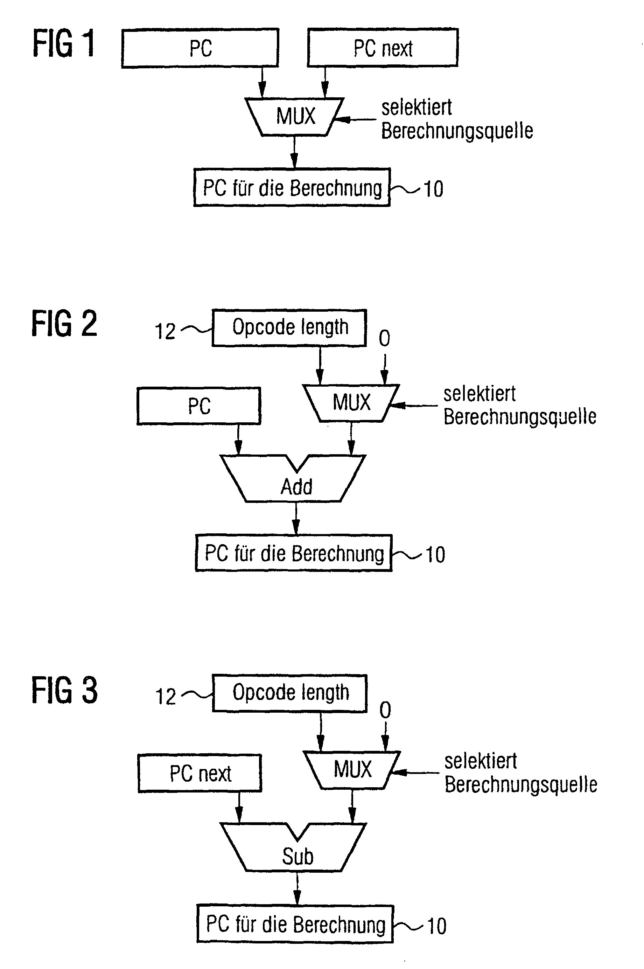

Figur 1 zeigt die erste Variante der vorliegenden Erfindung:

Dabei sind in dem Mikroprozessor zwei Befehlszähler (PC, PCnext) vorgesehen. Diese Befehlszähler enthalten jeweils den zu dem entsprechenden Assemblercode gehörigen Befehlszählerstand. Einer der Zähler (PC) zeigt also immer auf die aktuelle Programmzeile (beispielsweise für JAVA-Byte-Code), während ein weiterer Befehlszähler (PCnext)immer auf die Programmzeile des nächsten Assemblerbefehls zeigt (beispielsweise für ECO 2000 Assembler). Die Ausgänge der beiden Befehlszähler (PC, PCnext) sind mit einer Multiplexereinheit (MUX) verbunden, die in Abhängigkeit von dem jeweils gerade abzuarbeitenden Assemblercode den einen oder den anderen Befehlszählerstand zu ihrem Ausgang durchschaltet, der mit der Berechnungseinheit (10) für die relativen Adressen verbunden ist.

Figur 2 zeigt eine weitere Ausführungsform der Erfindung. Dabei ist lediglich ein Befehlszähler (PC) vorgesehen, der immer auf die aktuelle Befehlszeile zeigt. Zusätzlich muß hier in dem Mikroprozessor ein weiteres Register vorgesehen sein, welches die Befehlslänge (Opcode length) enthält. Der Ausgang dieses Registers (12) wird hier einer Multiplexereinheit (MUX) zugeführt, die von dem Parameter, der den jeweiligen Assemblercode bezeichnet, gesteuert wird. Der andere Eingang dieses Multiplexers ist mit dem Wert "0" belegt. Der Ausgang dieses Multiplexers wird einem Addierwerk (ADD) zugeführt, dessen anderer Eingang mit dem Befehlszähler (PC) verbunden ist. Der Ausgang des Addierwerks (ADD) ist dann mit der Berechnungseinheit (10) für die relativen Adressen verbunden.

Figur 3 zeigt eine weitere Ausführungsform der Erfindung. Dabei ist ebenfalls ein Register (12) vorgesehen, welches die Länge eines Assemblerbefehls (Opcode length) enthält. Auch hier wird der Ausgang dieses Registers einer Multiplexereinheit zugeführt, die von dem Parameter, der den jeweiligen Assemblercode bezeichnet, gesteuert wird. Der andere Eingang dieser Multiplexereinheit ist auch hier mit dem Wert 0 belegt.

Im Gegensatz zu der Ausführungsform der Figur 2 ist der Ausgang der Multiplexereinheit hier jedoch mit einem Subtrahierwerk (Sub) verbunden. Der andere Eingang dieses Subtrahierwerks ist mit dem Befehlszähler verbunden. Der Befehlszähler zeigt in diesem Fall jedoch nicht auf die aktuelle Assemblerbefehlszeile, sondern auf den nächsten Assemblerbefehl.

Der Ausgang des Subtrahierwerks (Sub) ist auch hier mit der Berechnungseinheit (10) für die relative Adressberechnung verbunden.

Gemäß einer weiteren, nicht in den Zeichnungen dargestellten Ausführungsform der Erfindung, kann der Wert der Befehlslänge auch zu dem Offsetwert, der zur Berechnung der relativen Adressen herangezogen wird, hinzugezählt, oder von diesem Offsetwert abgezogen werden.

Da die Assemblercodes in modernen Mikroprozessorsystemen an verschiedenen Stellen im Arbeitsspeicher gespeichert werden können, bevor sie vom Mikroprozessor abgearbeitet werden, ist es erforderlich, Adressierungen relativ, das heißt im Bezug auf die jeweilige Anordnung des Assemblercodes im Arbeitsspeicher anzugeben. Dazu dient die relative Adressierung, bei der zu allen Befehlen, die auf eine andere Adresse im Assemblercode zeigen, ein bestimmter Offsetwert hinzugerechnet wird. Dieser Offsetwert entspricht üblicherweise dem Abstand des Assemblercodes im Arbeitsspeicher, an dem das Programm vom Betriebssystem gespeichert worden ist. Mittels dieses Offsets können dann die im Assemblercode vorhandenen relativen Sprungadressen den tatsächlichen physikalischen Speicherplätzen der jeweiligen Programmzeile zugeordnet werden.

Erfindungsgemäß kann nun die Anpassung der relativen Adressierung natürlich auch dergestalt erfolgen, daß die Opcode-Länge zu dem Offsetwert hinzugerechnet wird, oder von diesem abgezogen wird.

Erfindungsgemäß kann beispielsweise bei Verwendung der Adresse der aktuellen Befehlszeile im Befehlszähler des Mikroprozessors dann optional die Befehlslänge zu dem Offsetwert hinzugerechnet werden, wenn ein Assembler verwendet wird, nach dessen Vorschrift der Befehlszähler auf den nächsten Assemblerbefehl zeigen muß.

Ebenso kann bei Verwaltung der Adresse des nächsten Assemblerbefehls in dem Befehlszähler des Prozessors die Befehlslänge von dem Offsetwert abgezogen werden, wenn ein Assembler abgearbeitet werden soll, bei dem der Befehlszähler immer auf den aktuellen Assemblerbefehl zeigen muß.

Erfindungsgemäß wird also bei der relativen Adressierung die Bezugsquelle, der Befehlszähler, beeinflußt, um die richtige Berechnungsvorschrift auszuwählen. Dabei kann entweder sowohl auf den aktuellen Befehlszähler als auch auf den Befehlszähler, der auf den nächsten Assemblerbefehl zeigt, zugegriffen werden, um die unterschiedlichen Berechnungsvorschriften zu berücksichtigen. Dabei wird entweder der Befehlszähler des gerade abzuarbeitenden Befehls (PC) oder der Befehlszähler, der auf den nächsten Befehl zeigt (PCnext) ausgewählt oder es werden jeweils ausgehend von einem der Befehlszählerstände die jeweils zugehörigen anderen Werte berechnet.

Es können also entweder beide Befehlszähler (PC und PCnext) in zwei Registern geführt werden, oder es kann mit Hilfe der bekannten Befehlslänge einer der beiden Befehlszählerstände berechnet werden. Dabei kann entweder aus dem aktuellen Befehlszählerstand durch hinzuzählen der Befehlslänge der auf den nächsten Befehl zeigende Befehlszählerstand berechnet werden, oder es kann aus dem auf den nächsten auszuführenden Befehl zeigenden Befehlszähler durch Abziehen einer Befehlslänge der aktuelle Befehlszählerstand (PC) berechnet werden. Darüber hinaus kann bei einer weiteren Variante die Befehlslänge zu dem Offsetwert addiert werden, wenn im Befehlszähler die Adresse des aktuellen Assemblerbefehls gespeichert ist und der Assemblercode die Adresse des nächsten auszuführenden Befehls benötigt, oder es kann durch Subtraktion der Opcode-Länge vom Offsetwert die Adresse des aktuellen Assemblerbefehls für den Assemblercode zur Verfügung gestellt werden, wenn der Befehlszähler des Prozessors stets auf den nächsten auszuführenden Assemblerbefehl zeigt.

Erfindungsgemäß kann damit erstmals ein Prozessor realisiert werden, der unterschiedliche Assemblerprogrammiersprachen mit unterschiedlichen Berechnungsvorschriften für relative Ziele im Verhältnis zum Befehlszähler innerhalb einer CPU erlaubt.

## Patentansprüche

1. Mikroprozessor zur Verarbeitung verschiedener Assemblercodes, bei dem in dem Mikroprozessor ein Parameter vorgesehen ist, der den jeweiligen Assemblercode bezeichnet, und abhängig davon, wie dieser Parameter gesetzt ist, eine unterschiedliche relative Adressierung erfolgt, **dadurch gekennzeichnet, daß** mehrere Programmzähler (PC, PCnext) vorgesehen sind und abhängig von dem Parameter jeweils einer dieser Programmzähler (PC, PCnext) bei der Berechnung relativer Adressen aktiv ist.

2. Mikroprozessor nach Anspruch 1, **dadurch gekennzeichnet, daß** die Programmzähler (PC, PCnext) mit einem Multiplexer (MUX) verbunden sind, der von dem Parameter gesteuert wird, und der Ausgang des Multiplexers mit einer Berechnungseinheit (10) für die relativen Adressen verbunden ist.

3. Mikroprozessor nach Anspruch 1, **dadurch gekennzeichnet, daß** zwischen dem Programmzähler (PC) und der Berechnungseinheit (10) für die relativen Adressen ein Addierwerk (Add) angeordnet ist, dessen einer Eingang mit dem Programmzähler (PC) und dessen anderer Eingang über einen Multiplexer (MUX), der von dem Parameter gesteuert wird, mit einem Speicher (12) für die Befehlslänge (Opcode length) oder mit dem Wert 0 verbunden wird, und dessen Ausgang mit der Berechnungseinheit (10) verbunden ist.

4. Mikroprozessor nach Anspruch 1, **dadurch gekennzeichnet, daß** zwischen dem Programmzähler (PCnext) und der Berechnungseinheit (10) für die relativen Adressen ein Subtrahierwerk (Sub) angeordnet ist, dessen einer Eingang mit dem Programmzähler (PCnext) und dessen anderer Eingang über einen Multiplexer (MUX), der von dem Parameter gesteuert wird, mit einem Speicher (12) für die Befehlslänge (Opcode length) oder mit dem Wert 0 verbunden wird, und dessen Ausgang mit der Berechnungseinheit (10) verbunden ist.

5. Verfahren zur relativen Adressierung in einem Mikroprozessor, bei dem abhängig von einem Betriebszustand oder Parameter für den jeweiligen Assemblercode, relative Adressen unterschiedlich ermittelt werden, **dadurch gekennzeichnet, daß** für die verschiedenen Betriebszustände oder Assemblercodes mehrere Programmzähler (PC, PCnext) vorgesehen werden, die abhängig vom Betriebszustand oder Assemblercode ausgewählt werden.

6. Verfahren nach Anspruch 5, **dadurch gekennzeichnet, daß** abhängig von den verschiedenen Betriebszuständen oder Assemblercodes zu dem Programmzählerstand für die relative Adressberechnung die Befehlslänge (Opcode length) hinzugezählt oder abgezogen wird, oder der Programmzählerstand unverändert bleibt.

7. Verfahren nach Anspruch 6, **dadurch gekennzeichnet, daß** abhängig von den verschiedenen Betriebszuständen oder Assemblercodes zu dem Offsetwert, der üblicherweise zur Berechnung relativer Adressen herangezogen wird, eine Befehlslänge (Opcode length) hinzugezählt oder abgezogen wird, oder der Offsetwert unverändert bleibt.

## Claims

1. Microprocessor for processing various assembler codes, in which a parameter which designates the respective assembler code is provided in the microprocessor and, dependent on how this parameter is set, a different relative addressing takes place, **characterized in that** a plurality of program counters (PC, PCnext) are provided and, dependent on the parameter, in each case one of these program counters (PC, PCnext) is active in the computation of relative addresses.

2. Microprocessor according to Claim 1, **characterized in that** the program counters (PC, PCnext) are connected to a multiplexer (MUX), which is controlled by the parameter, and the output of the multiplexer is connected to a computation unit (10) for the relative addresses.

3. Microprocessor according to Claim 1, **characterized in that** arranged between the program counter (PC) and the computation unit (10) for the relative addresses is an adding unit (Add), the one input of which is connected to the program counter (PC) and the other input of which is connected via a multiplexer (MUX), which is controlled by the parameter, to a memory (12) for the instruction length (Opcode length) or to the value 0, and the output of which is connected to the computation unit (10).

4. Microprocessor according to Claim 1, **characterized in that** arranged between the program counter (PCnext) and the computation unit (10) for the relative addresses is a subtracting unit (Sub), the one input of which is connected to the program counter (PCnext) and the other input of which is connected via a multiplexer (MUX), which is controlled by the parameter, to a memory (12) for the instruction length (Opcode length) or to the value 0, and the output of which is connected to the computation unit (10).

5. Method of relative addressing in a microprocessor in which, dependent on an operating state or parameter for the respective assembler code, relative addresses are differently determined, **characterized in that** for the various operating states or assembler codes a plurality of program counters (PC, PCnext), which are selected dependent on the operating state or assembler code, are provided.

6. Method according to Claim 5, **characterized in that**, dependent on the various operating states or assembler codes, the instruction length (Opcode length) is added to or subtracted [lacuna] the program counter reading for the relative address computation, or the program counter reading remains unchanged.

7. Method according to Claim 6, **characterized in that**, dependent on the various operating states or assembler codes, an instruction length (Opcode length) is added to or subtracted [lacuna] the offset value, which is usually used for the computation of relative addresses, or the offset value remains unchanged.

## Revendications

1. Microprocesseur pour le traitement de différents codes en assembleur, dans lequel il est prévu dans le microprocesseur un paramètre qui désigne le code en assembleur respectif et dans lequel il s'effectue en fonction de l'affectation de ce paramètre un adressage relatif différent, **caractérisé par le fait qu'**il est prévu plusieurs compteurs de programme (PC, PCnext) et que, en fonction du paramètre, l'un de ces compteurs de programme (PC, PCnext) est respectivement actif lors du calcul d'adresses relatives.

2. Microprocesseur selon la revendication 1, **caractérisé par le fait que** les compteurs de programme (PC, PCnext) sont reliés à un multiplexeur (MUX) qui est commandé par le paramètre et que la sortie du multiplexeur est reliée à une unité de calcul (10) pour les adresses relatives.

3. Microprocesseur selon la revendication 1, **caractérisé par le fait qu'**il y a entre le compteur de programme (PC) et l'unité de calcul (10) pour les adresses relatives un élément additionneur (Add) dont une entrée est reliée au compteur de programme (PC) et dont l'autre entrée est reliée par l'intermédiaire d'un multiplexeur (MUX) commandé par le paramètre à une mémoire (12) pour la longueur d'instruction (Opcode length) ou à la valeur 0 et dont la sortie est reliée à l'unité de calcul (10).

4. Microprocesseur selon la revendication 1, **caractérisé par le fait qu'**il y a entre le compteur de programme (PCnext) et l'unité de calcul (10) pour les adresses relatives un élément soustracteur (Sub) dont une entrée est reliée au compteur de programme (PCnext) et dont l'autre entrée est reliée par l'intermédiaire d'un multiplexeur (MUX) commandé par le paramètre à une mémoire (12) pour la longueur d'instruction (Opcode length) ou à la valeur 0 et dont la sortie est reliée à l'unité de calcul (10).

5. Procédé pour l'adressage relatif dans un microprocesseur, dans lequel des adresses relatives sont déterminées différemment selon un état de fonctionnement ou un paramètre pour le code en assembleur respectif, **caractérisé par le fait qu'**il est prévu pour les différents états de fonctionnement ou codes en assembleur plusieurs compteurs de programme (PC, PCnext) qui sont sélectionnés en fonction de l'état de fonctionnement ou du code en assembleur.

6. Procédé selon la revendication 5, **caractérisé par le fait que**, en fonction des différents états de fonctionnement ou codes en assembleur, la longueur d'instruction (Opcode length) est ajoutée à ou soustraite de l'état de compteur de programme pour le calcul d'adresses relatives ou l'état de compteur de programme reste inchangé.

7. Procédé selon la revendication 6, **caractérisé par le fait que**, en fonction des différents états de fonctionnement ou codes en assembleur, une longueur d'instruction (Opcode length) est ajoutée à ou soustraite de la valeur d'offset qui est habituellement exploitée pour le calcul d'adresses relatives ou la valeur d'offset reste inchangée.
